(19) Europäisches Patentamt
European Patent Office
Office européen des brevets

(11) **EP 4 745 908 A1**

(12) **EUROPEAN PATENT APPLICATION**
published in accordance with Art. 153(4) EPC

(43) Date of publication:
20.05.2026 Bulletin 2026/21

(21) Application number: 24855214.3

(22) Date of filing: 06.02.2024

(51) International Patent Classification (IPC):
*G06V 10/44* (2022.01)    *G06V 10/28* (2022.01)
*G06T 17/00* (2006.01)

(52) Cooperative Patent Classification (CPC):
**G06V 20/68; G06T 7/12; G06T 7/194; G06V 10/82;**
G06T 2207/20081; G06T 2207/20084; Y02A 90/10

(86) International application number:
**PCT/CN2024/076363**

(87) International publication number:
**WO 2025/039480 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 22.08.2023  CN 202311060786

(71) Applicants:
• **Haikou Xiaojian Technology Co., Ltd
Haikou, Hainan 570208 (CN)**
• **Chen, Xiaojian
Broadwood, Western Australia 6430 (AU)**

(72) Inventor: **The designation of the inventor has not yet been filed**

(74) Representative: **Santarelli
Tour Trinity
1 bis Place de la Défense
92400 Courbevoie (FR)**

(54) **HEALTH MANAGEMENT METHOD BASED ON IMAGE RECOGNITION**

(57)    A health management method based on image recognition includes: S1, obtaining a food image; S2, extracting and matching object contour images in the food image with each pre-stored food type information to determine a target contour image and a food type therein; S3, binarizing the target contour image; S4, inputting the binarized target contour image into a pre-trained three-dimensional reconstruction model to output a three-dimensional point cloud; S5, calculating a volume of the three-dimensional point cloud based on a three-dimensional point cloud under a world coordinate system, and determining a volume of a food in the target contour image based on the volume of the three-dimensional point cloud; and S6, obtaining calories and nutritional components of the food in the food image based on the volume of the food and a volume-weight conversion ratio of the food type.

FIG. 1

**Description**

**Technical Field**

The disclosure relates to the field of food image data processing technologies, and more particularly to a health management method based on image recognition.

**Background of the Invention**

At present, with the improvement of living standards, more and more people are paying attention to healthy eating and healthy living, such as how to effectively control calorie intake from food, and how to effectively control nutritional intake from food, so as to achieve a balance with daily calorie consumption and nutritional needs of the human body, which allows people to maintain a healthy weight while not suffering from malnutrition.

However, at present, most people do not have a specific concept of the daily calorie and nutritional intake of their bodies. Generally, they rely on professionals such as dietitians and fitness trainers to roughly understand calories and nutritional components of certain specific foods. As for a rich variety of dining foods in China, people often cannot accurately and conveniently calculate the calories and nutritional components of the foods with various sizes and types.

Currently, there are applications related to weight loss and health management that require users to manually input types and weights of foods consumed daily in order to analyze and obtain the daily calorie and nutritional intake of the human body. Multiple manual inputs cause inconvenience for the users, and sometimes the users cannot accurately estimate the weights of the foods, leading to deviations in the recorded calories and nutritional components. As a result, users are unable to accurately grasp the daily calorie and nutritional intake of their bodies.

Therefore, there is an urgent need for a health management method based on image recognition.

**Summary of the Invention**

1. Technical problems to be solved

In response to above disadvantages and shortcomings in the related art, the disclosure provides a health management method based on image recognition, which makes it more convenient for a user to use and can accurately record calories and nutritional components intake of the human body.

2. Technical solutions

To achieve above purposes, the disclosure adopts the following technical solutions.

**In** a first aspect, the disclosure provides the health management method based on image recognition, including following steps:

step S1, obtaining a food image taken by a user and determining whether there is a food label in the food image;

step S2, extracting, in response to determining there is no food label in the food image, object contour images in the food image, and matching each object contour image with each pre-stored food type information to determine a target contour image and a food type within the target contour image;

step S3, binarizing the target contour image to obtain a binarized target contour image, where a food part of the target contour image is set to 1 and a background part of the target contour image is set to 0;

step S4, inputting the binarized target contour image into a pre-trained three-dimensional reconstruction model to output a three-dimensional point cloud, where the pre-trained three-dimensional reconstruction model includes a feature encoder and a point cloud predictor connected with the feature encoder, the feature encoder includes a convolutional layer and a rectified linear unit (ReLU) layer, and the point cloud predictor is a fully connected network;

step S5, calculating a volume of the three-dimensional point cloud based on a three-dimensional point cloud under world coordinate system, and determining a volume of a food in the target contour image based on the volume of the three-dimensional point cloud; and

step S6, obtaining a weight of the food in the food image based on the volume of the food and a volume-weight conversion ratio of the food type, and obtaining calories and nutritional components of the food in the food image based on the weight of the food in the food image.

In an embodiment, in the step S2, a semantic segmentation network is used to extract the object contour images in the food image.

In an embodiment, the step S2 specifically includes:

separating foreground contours from background contours in the food image, matching each object contour image belonging to the foreground contours with each pre-stored food type information to determine the target contour image and the food type within the target contour image.

In an embodiment, the matching each object contour image with each pre-stored food type information to determine the target contour image and the food type within the target contour image includes:

matching each object contour image with each pre-stored food type information to obtain target object contour images and food type information whose matching rates exceeding a preset threshold from the object contour images and the pre-stored food type information, and pairing one of the target object contour images with a highest matching rate with the food type information to determine the target contour image and the food type within the first target contour image.

In an embodiment, the health management method based on the image recognition before the step S1, further includes the following step:

receiving food images for training to generate a training sample, and inputting the training sample into a three-dimensional reconstruction model for model training based on a loss function to obtain the pre-trained three-dimensional reconstruction model.

The loss function is as follows:

$$L(\{S_i^{pred}\}, \{S_i^{gt}\}) = \sum_i d(S_i^{pred}, S_i^{gt}),$$

$$d\left(S_i^{pred}, S_i^{gt}\right) = d_1\left(S_i^{pred}, S_i^{gt}\right) + d_2(S_i^{pred}, S_i^{gt}),$$

$$d_1(S_i^{pred}, S_i^{gt}) = \sum_{x \in S_i^{pred}} \min_{y \in S_i^{gt}} \|x - y\|_2^2 + \sum_{y \in S_i^{gt}} \min_{x \in S_i^{pred}} \|x - y\|_2^2,$$

$$d_2(S_i^{pred}, S_i^{gt}) = \min_{\emptyset: S_i^{pred} \to S_i^{gt}} \sum_{x \in S_i^{pred}} \|x - \emptyset(x)\|_2,$$

where L represents the loss function, i represents the training sample, $S_i^{pred}$ represents a predicted three-dimensional point cloud of the training sample i output by a three-dimensional reconstruction model S, $S_i^{gt}$ represents true three-dimensional information of the training sample i, $S = \sum_{j=1}^{N} \{(x_j, y_j, z_j)\}$ represents an unordered point set, ø represents mapping from $S_i^{pred} \to S_i^{gt}$, x represents a point value in the predicted three-dimensional point cloud output by the three-dimensional reconstruction model S, and y represents a point value in true three-dimensional information of the training sample i.

In an embodiment, the health management method based on the image recognition further includes the following step:

step S7, reading, in response to determining there is the food label in the food image, basic food information according to the food label, and obtaining the calories and nutritional components of the food in the food image based on the basic food information.

In an embodiment, the basic food information includes weight information, calorie information and nutritional component information of the food.

In an embodiment, the food label includes a food weight label, a food calorie label, a food nutritional component label, a food additive content label and a food taste and texture label. The food weight label includes a combination of a weight attribute, a number, and a measurement unit. The food calorie label includes comparative information between the calories of the food and one or both of an adult daily standard calorie and a minor daily standard calorie. The food nutritional component label includes comparative information between each nutritional component of the food and one or both of an adult daily standard nutritional component corresponding to each nutritional component of the food and a minor daily standard nutritional component corresponding to each nutritional component of the food. The food additive content label includes a combination of food additive types, numbers, and measurement units. The food taste and texture label includes comparative information between a taste of the food and representative food tastes, and comparative information between textures of the food and representative food textures.

In an embodiment, the food label further includes a food code which can be read to trace origin of the food, a growth process of the food, a growth environment of the food, and an entire process of storage and sales of the food.

In a second aspect, the disclosure provides a health management device based on the image recognition, including an obtaining module, a target contour image selection module, a three-dimensional reconstruction module and a first calorie and nutritional component determination module (i.e., a calorie and nutritional component determination module).

The obtaining module is embodied by software stored in at least one memory and executable by at least one processor. The target contour image selection module is embodied by software stored in at least one memory and executable by at least one processor. The three-dimensional reconstruction module is embodied by software stored in at least one memory and executable by at least one processor. The first calorie and nutritional component determination module is embodied by software stored in at least one memory and executable by at least one processor.

The obtaining module is configured to obtain the food image taken by the user and determine whether there is the food label in the food image.

The target contour image selection module is configured to extract, in response to determining there is no food label in the food image, the object contour images in the food image, and match each object contour image with each pre-stored food type information to determine the target contour image and the food type within the target contour image.

The three-dimensional reconstruction module is configured to binarize the target contour image to set the food part of the target contour image to 1 and the background part of the target contour image to 0 to obtain the binarized target contour image, and input the binarized target contour image into the pre-trained three-dimensional reconstruction model to output the three-dimensional point cloud. The pre-trained three-dimensional reconstruction model includes the feature encoder and the point cloud predictor connected with the feature encoder, the feature encoder includes the convolutional layer and the ReLU layer, and the point cloud predictor is the fully connected network.

The first calorie and nutritional component determination module is configured to calculate a volume of the three-dimensional point cloud based on the three-dimensional point cloud under the world coordinate system, determine the volume of the food in the target contour image based on the volume of the three-dimensional point cloud, obtain the weight of the food in the food image based on the volume of the food and a volume-weight conversion ratio of the food type, and obtain the calories and the nutritional components of the food in the food image based on the weight of the food in the food image.

3. Beneficial effects

The disclosure has the following beneficial effects: The health management method based on the image recognition provided by the disclosure can analyze the calories and the nutritional components of the food in the food image by using different methods based on whether there is a food label in the food image. Especially when there is no food label in the food image, by extracting a food contour and performing three-dimensional modeling, the disclosure can accurately predict a three-dimensional shape of the food, thereby accurately calculating the calories and the nutritional components of the food. Without a need for the user to manually input the food type and the weight of the food, the health management method can automatically analyze the food image to determine the food type, the calories, and the nutritional components of the food simply by taking a photo of the food, making it more convenient for the user to use.

**Brief Description of the Drawings**

FIG. 1 illustrates a schematic flowchart of a health management method based on image recognition according to an embodiment of the disclosure.
FIG. 2 illustrates a schematic structural diagram of a health management device based on image recognition according to an embodiment of the disclosure.
FIG. 3 illustrates a schematic diagram of a food label according to an embodiment of the disclosure.

Description of reference numerals: 1: obtaining module; 2: target contour image selection module; 3: three-dimensional reconstruction module; 4: first calorie and nutritional component determination module; 5: second calorie and nutritional component determination module.

**Detailed Description of Embodiments**

In order to better explain the disclosure and facilitate understanding, a detailed description of the disclosure is provided below through embodiments, in conjunction with the accompanying drawings.

An embodiment of the disclosure provides a health management method based on image recognition. The health management method can analyze calories and nutritional components of a food in a food image by using different methods based on whether there is a food label in the food image. Without a need for a user to manually input a food type and a weight of the food, the health management method can automatically analyze the food image to determine the food type, the calories, and the nutritional components of the food simply by taking a photo of the food, making it more convenient for the user to use.

**In** order to better understand the above technical solutions, exemplary embodiments of the disclosure are described in more detail below with reference to the accompanying drawings. Although the exemplary embodiments of the disclosure are shown in the accompanying drawings, it should be understood that the disclosure can be implemented in various forms and should not be limited by the embodiments described herein. Contrarily, the embodiments are provided to enable a clearer and more thorough understanding of the disclosure, and to fully convey the scope of the disclosure to those skilled in the art.

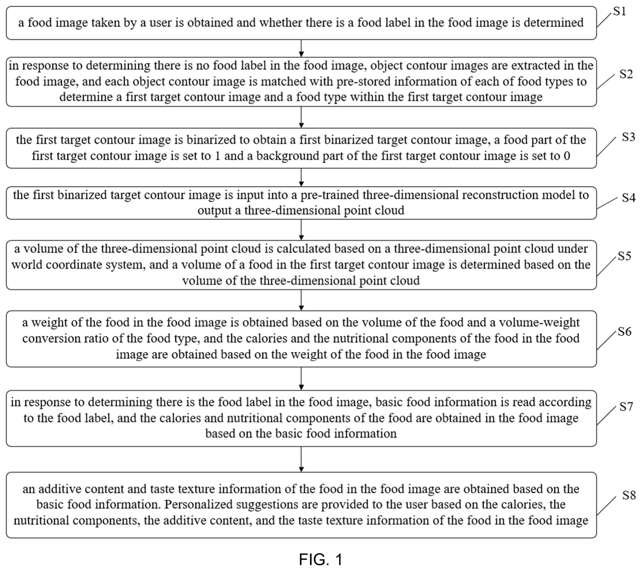

FIG. 1 illustrates a schematic flowchart of the health management method based on the image recognition according to the embodiment of the disclosure. As shown in FIG. 1, the health management method includes following steps S1 to S8.

Step S1, a food image taken by a user is obtained and whether there is a food label in the food image is determined.

Preferably, the food image taken by the user contains only one type of a food, which facilitates a subsequent image recognition method to identify the food in the food image, and can accurately analyze the type, calories, and nutritional components of the food in the food image.

Step S2, in response to determining there is no food label in the food image, object contour images are extracted in the food image, and each object contour image is matched with pre-stored information of each of food types to determine a first target contour image and a food type within the first target contour image.

Preferably, a semantic segmentation network is used to extract the object contour images in the food image. Furthermore, the semantic segmentation network uses Deeplab v3+, which can accurately extract the object contour images in the food image.

Preferably, the pre-stored information of each food type is image information of different types of foods. For example, the image information of bread (excluding containers) and the image information of eggs (excluding containers) etc.

Preferably, in the step S2, foreground contours are separated from background contours in the food image, each object contour image belonging to the foreground contours is matched with the pre-stored information of each food type to determine the first target contour image and the food type within the first target contour image.

Preferably, the step that each object contour image is matched with the pre-stored information of each food type to determine the first target contour image and the food type within the first target contour image includes: each object contour image is matched with the pre-stored information of each food type to obtain target object contour images and food type information whose matching rates exceeding a preset threshold from the object contour images and the pre-stored food type information, and one of the target object contour images with a highest matching rate is paired with the food type information to determine the first target contour image and the food type within the first target contour image. **In** this way, a food part image can be extracted from the food image, which facilitates subsequent three-dimensional modeling based on the food part image.

Preferably, the step S2 further includes: each object contour image is matched with each container shape information to determine a second target contour image, which achieves extraction of a food container in the food image. **The** calories and the nutritional components of the food can be more accurately obtained through analyzing the food part image combined with food container.

Step S3, the first target contour image is binarized to obtain a first binarized target contour image, a food part of the first target contour image is set to 1 and a background part of the first target contour image is set to 0.

Preferably, the step S3 further includes: the second target contour image is binarized to obtain a second binarized target contour image, a food container part of the second target contour image is set to 1 and a background part of the second target contour image is set to 0.

Step S4, the first binarized target contour image is input into a pre-trained three-dimensional reconstruction model to output a three-dimensional point cloud, the pre-trained three-dimensional reconstruction model includes a feature encoder and a point cloud predictor connected with the feature encoder, the feature encoder includes a convolutional layer and a rectified linear unit (ReLU) layer, and the point cloud predictor is a fully connected network.

Each input image is encoded into a latent feature representation through the feature encoder. The point cloud predictor predicts coordinate information of the three-dimensional point cloud based on the latent feature representation.

Preferably, the first binarized target contour image and the second binarized target contour image are input into the pre-trained three-dimensional reconstruction model to output the three-dimensional point cloud of the first target contour image. **In** this way, the three-dimensional point cloud can be more accurately obtained through three-dimensional modeling of the food by combining the food part image and the food container.

Step S5, a volume of the three-dimensional point cloud is calculated based on a three-dimensional point cloud under world coordinate system, and a volume of a food in the first target contour image is determined based on the volume of the three-dimensional point cloud.

Step S6, a weight of the food in the food image is obtained based on the volume of the food and a volume-weight conversion ratio of the food type, and the calories and the nutritional components of the food in the food image are obtained based on the weight of the food in the food image.

Step S7, in response to determining there is the food label in the food image, basic food information is read according to the food label, and the calories and nutritional components of the food are obtained in the food image based on the basic food information.

Specifically, the basic food information includes weight information, calorie information and nutritional component information of the food.

Step S8, an additive content and taste texture information of the food in the food image are obtained based on the basic food information. Personalized suggestions are provided to the user based on the calories, the nutritional components, the additive content, and the taste texture information of the food in the food image.

Preferably, before the step S1, the health management method further includes: food images for training are received to generate a training sample, and the training sample is input into a three-dimensional reconstruction model for model training based on a loss function to obtain the pre-trained three-dimensional reconstruction model.

An expression of the three-dimensional reconstruction model is: S = G(i, r, θ). Where G represents a neural network, r represents a perturbation variable and θ represents a network parameter.

The loss function is as follows:

$$L\left(\left\{S_i^{\mathrm{pred}}\right\}, \left\{S_i^{\mathrm{gt}}\right\}\right) = \sum_i d(S_i^{\mathrm{pred}}, S_i^{\mathrm{gt}}),$$

$$d\left(S_i^{\mathrm{pred}}, S_i^{\mathrm{gt}}\right) = d_1\left(S_i^{\mathrm{pred}}, S_i^{\mathrm{gt}}\right) + d_2(S_i^{\mathrm{pred}}, S_i^{\mathrm{gt}}),$$

$$d_1(S_i^{\mathrm{pred}}, S_i^{\mathrm{gt}}) = \sum_{x \in S_i^{\mathrm{pred}}} \min_{y \in S_i^{\mathrm{gt}}} \|x - y\|_2^2 + \sum_{y \in S_i^{\mathrm{gt}}} \min_{x \in S_i^{\mathrm{pred}}} \|x - y\|_2^2,$$

$$d_2(S_i^{\mathrm{pred}}, S_i^{\mathrm{gt}}) = \min_{\emptyset: S_i^{\mathrm{pred}} \to S_i^{\mathrm{gt}}} \sum_{x \in S_i^{\mathrm{pred}}} \|x - \emptyset(x)\|_2,$$

where L represents the loss function, i represents the training sample, $S_i^{\mathrm{pred}}$ represents a predicted three-dimensional point cloud of the training sample i output by the three-dimensional reconstruction model S, $S_i^{\mathrm{gt}}$ represents true three-dimensional information of the training sample i, $S = \sum_{j=1}^{N}\{(x_j, y_j, z_j)\}$ represents an unordered point set, ø represents mapping from $S_i^{\mathrm{pred}} \to S_i^{\mathrm{gt}}$, x represents a point value in the predicted three-dimensional point cloud output by the three-dimensional reconstruction model S, and y represents a point value in true three-dimensional information of the training sample i.

The pre-trained three-dimensional reconstruction model trained under the loss function has high stability and accuracy.

In summary, the health management method based on the image recognition provided by the disclosure can analyze the calories and the nutritional components of the food in the food image by using different methods based on whether there is a food label in the food image. Especially when there is no food label in the food image, by extracting a food contour and performing three-dimensional modeling, the disclosure can accurately predict a three-dimensional shape of the food, thereby accurately calculating the calories and the nutritional components of the food. Without a need for the user to manually input the food type and the weight of the food, the health management method can automatically analyze the food image to determine the food type, the calories, and the nutritional components of the food simply by taking a photo of the food, making it more convenient for the user to use.

Through the health management method based on the image recognition provided by the disclosure, a personalized and balanced dietary plan can be recommended according to individual needs, preferences, and health conditions, on the basis of accurately obtaining the food type, the calories, and the nutritional components of the food in the food image. The health management method helps people choose healthy foods, and over time, can more comprehensively understand personal dietary habits and lifestyle choices, thereby making recommendations more precise and accurate.

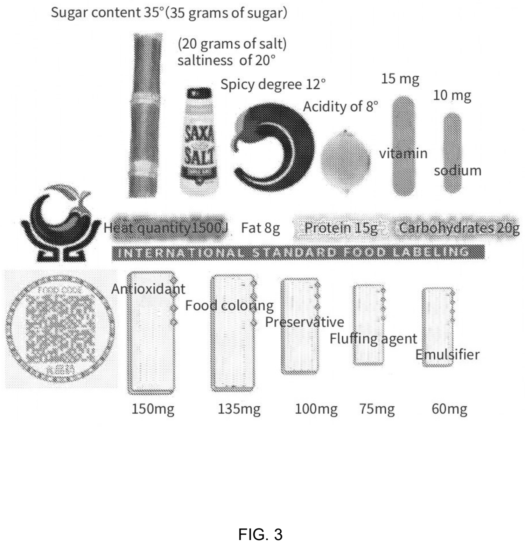

Specifically, as shown in FIG. 3, the food label includes a food weight label, a food calorie label, a food nutritional component label, a food additive content label and a food taste and texture label.

The food weight label includes a combination of a weight attribute, a number, and a measurement unit to represent an actual weight of the food. As an example, the food weight label includes "Net content 50 grams (g)".

The food calorie label includes a combination of a calorie attribute, a number, and a measurement unit to represent an actual calorie of the food. As an example, the food calorie label includes "Calories 1500 joules".

Preferably, the food calorie label includes comparative information between the calories of the food and one or both of an adult daily standard calorie and a minor daily standard calorie. As an example, the adult daily standard calorie is 100, the calories of the food are compared with the adult daily standard calorie, and percentages, numbers, and graphics are used to identify the comparative information, which is concise and intuitive, easy to understand, and convenient for people to choose, thereby allowing people to precisely control the calorie intake and reduce the obesity occurrence. Moreover, the food calorie label is also easy for a computer to recognize. Current foods identify calories contained in foods in a form of numerical tables, which are not intuitive enough, because there is no comparison object, and consumers do not know whether the calories they intake are too much or too little, which is unable to achieve a purpose of reasonable calorie intake. Through the food label provided by the disclosure, the consumers can easily know how much of the food they need to intake.

The food nutritional component label includes a combination of nutritional component types, numbers, and measurement units to represent actual nutritional components of the food. As an example, the food nutritional component label includes "Fat 8 g, protein 15 g, carbohydrates 20 g, vitamins 15 milligrams (mg), sodium 10 mg".

Preferably, the food nutritional component label includes comparative information between the nutritional components of the food and one or both of an adult daily standard nutritional component and a minor daily standard nutritional component. As an example, the adult daily standard nutritional component is 100, the nutritional components of the food is compared with the adult daily standard nutritional component, and percentages, numbers, and graphics are used to identify the comparative information, which is concise and intuitive, easy to understand, and convenient for people to choose, thereby allowing people to precisely control the nutritional components intake, and avoiding nutritional excess and deficiency. Moreover, the food nutritional component label is also easy for the computer to recognize. Current foods identify the nutritional components contained in the foods in the form of numerical tables, which are not intuitive enough, because there is no comparison object, and the consumers do not know whether the nutritional components they intake are too much or too little, which is unable to achieve the purpose of reasonable nutritional component intake. Through the food label provided by the disclosure, the consumers can easily know how much of the food they need to intake.

The food additive content label includes a combination of food additive types, numbers, and measurement units to represent actual additives of the food. Specifically, a relative value of the additive content is represented by different sizes and lengths of shapes, while an absolute value of additive content is represented by numbers. As an example, the food additive content label includes "Antioxidant 150 mg, food coloring 135 mg, preservatives 100 mg, leavening agents 75 mg, emulsifiers 60 mg".

The food taste and texture label includes comparative information between a taste of the food and representative food tastes, and comparative information between a texture of the food and representative food textures. Specifically, a relative value of the taste and texture of the food is represented by different sizes and lengths of shapes, while an absolute value of the taste and texture of the food is represented by numbers. Sweetness of food is as an example, a representative food for the sweetness is sucrose. The sweetness of a saturated aqueous solution of the sucrose at 25°C is defined as 100 degrees, and the sweetness of pure water is defined as 0 degree, with 100 increments in between, each increment being 1 degree. A unit amount of the food is extracted and dissolved in a certain amount of water, after the sugar content completely dissolve in the water, the sugar content of the food is measured and then compared with sweetness of the sucrose to determine the sweetness of the food as 35 degrees. The greater the sweetness, the sweeter the food. In this way, the taste and texture of the food can be identified and indicated, providing the consumers with an intuitive and concise basis for choosing food.

Preferably, the food label further includes an allergen label, the allergen label includes a combination of allergen attributes and allergen components in the food. As an example, the allergen label includes "Allergen peanut". Allergy warnings are provided through the food label, giving people with allergic constitutions a basis for choice. For example, someone who are allergic to peanuts will know that the food is not suitable for them when they see the allergen label.

Preferably, the food label further includes a food code which can be read to trace origin of the food, a growth process, a growth environment, and an entire process of storage and sales, forming a food chain. In this way, the entire process of the food from farm to table is tracked, if a food product needs to be recalled, a manufacturer can use the food chain to accurately locate an involved batch, thereby reducing the waste and costs caused by a large-scale recall. Moreover, once the food product is delivered, retailers and the consumers can use a quick response (QR) code to view key information of the food product, which is convenient for the consumers to make choices. Specifically, in the embodiment, the food code is presented in a form of the QR code.

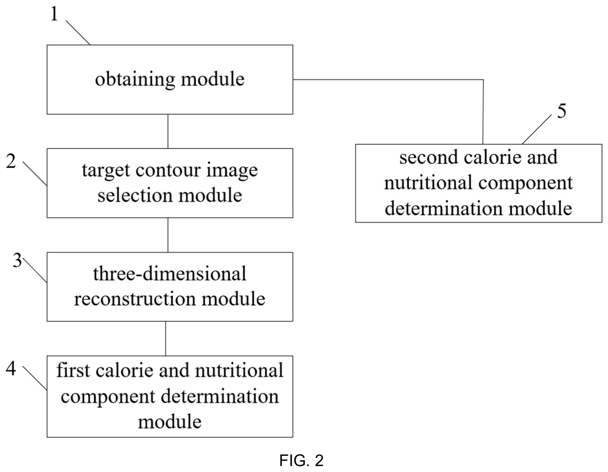

As shown in FIG. 2, the embodiment of the disclosure further provides a health management device based on the image recognition. The health management device includes an obtaining module 1, a target contour image selection module 2, a three-dimensional reconstruction module 3 and a first calorie and nutritional component determination module 4. The obtaining module 1 is configured to obtain the food image taken by the user and determine whether there is the food label in the food image. The target contour image selection module 2 is configured to extract the object contour images in the food image in response to determining there is no food label in the food image, and match each object contour image with the pre-stored information of each food type to determine a target contour image and the food type within the target contour image. The three-dimensional reconstruction module 3 is configured to binarize the target contour image to set the food part of the target contour image to 1 and the background part of the target contour image to 0 to obtain the binarized target contour image, , and input the binarized target contour image into the pre-trained three-dimensional reconstruction model to output the three-dimensional point cloud. The pre-trained three-dimensional reconstruction model includes the feature encoder and the point cloud predictor which are connected sequentially, the feature encoder includes the convolutional layer and the ReLU layer, and the point cloud predictor is the fully connected network. The first calorie and nutritional component determination module 4 is configured to calculate the volume of the three-dimensional point cloud based on the three-dimensional point cloud under the world coordinate system, determine the volume of a food in the target contour image based on the volume of the three-dimensional point cloud, obtain the weight of the food in the food image based on the volume of the food and a volume-weight conversion ratio of the food type, and obtain the calories and the nutritional components of the food in the food image based on the weight of the food in the food image.

Preferably, the health management device based on the image recognition further includes a second calorie and nutritional component determination module 5, configured to read the basic food information based on the food label in response to determining there is the food label in the food image and obtain the calories and the nutritional components of the food in the food image based on the basic food information.

It should be noted that specific functions of each module in the health management device based on the image recognition provided by the disclosure, as well as a health management process based on the image recognition, can refer to the detailed description of the health management method based on the image recognition provided in the above embodiment, which are not be repeated here.

In summary, the health management device based on the image recognition provided by the disclosure can analyze the calories and the nutritional components of the food in the food image by using different methods based on whether there is the food label in the food image. Especially when there is no food label in the food image, by extracting a food contour and performing three-dimensional modeling, the health management device can accurately predict a three-dimensional shape of the food, thereby accurately calculating the calories and the nutritional components of the food. Without a need for the user to manually input the food type and the weight of the food, the health management device can automatically analyze the food image to determine the food type, the calories, and the nutritional components of the food simply by taking a photo of the food, making it more convenient for the user to use.

In the description of the disclosure, it should be understood that terms "first" and "second" are used only for descriptive purposes and should not be interpreted as indicating or implying relative importance or implicitly indicating the number of technical features indicated. Therefore, features defined with "first" and "second" can explicitly or implicitly include one or more of such features. In the description of the disclosure, the meaning of "multiple" is two or more, unless otherwise explicitly specified.

In the disclosure, unless otherwise specified and limited, terms "installed", "connected", and "fixed", etc., should be broadly understood, for example, it can be a fixed connection, a detachable connection or integrated; It can be a mechanical connection or an electrical connection; It can be a direct connection or an indirect connection through an intermediate medium; It can be a connection within two components or an interaction relationship between two components. For those skilled in the art, specific meanings of the above terms in the disclosure can be understood according to the specific situation.

In the disclosure, unless otherwise specified and limited, a first feature is located "above" or "below" a second feature, which may be direct contact between the first and second features, or indirect contact between the first and second features through an intermediate medium. Moreover, if the first feature is "above", "on", or "over" the second feature, it can be directly above or diagonally above the second feature, or simply indicate that the first feature is horizontally higher than the second feature. The first feature is "below" the second feature, which can be directly or diagonally below the second feature, or simply indicated that the first feature is horizontally lower than the second feature.

In the description of the specification, terms "an embodiment", "some embodiments", "embodiments", "examples", "specific examples" or "some examples" refer to specific features, structures, materials or characteristics described in conjunction with the embodiments or the examples included in at least one embodiment or example of the disclosure. In the specification, schematic expressions of the above terms do not necessarily refer to the same embodiments or examples. Moreover, the specific features, structures, materials, or characteristics described can be combined in any one or more embodiments or examples in an appropriate manner. In addition, those skilled in the art can combine the different embodiments or examples described in the specification, as well as the features of different embodiments or examples, without conflicting with each other.

Although the embodiments of the disclosure are shown and described above, it can be understood that the above embodiments are exemplary and should not be construed as limiting the disclosure. Those skilled in the art can modify, alter, substitute, and amend the above embodiments within the scope of the disclosure.

## Claims

1. A health management method based on image recognition, comprising:

   step S1, obtaining a food image taken by a user and determining whether there is a food label in the food image;
   step S2, extracting, in response to determining there is no food label in the food image, object contour images in the food image, and matching each object contour image with each pre-stored food type information to determine a target contour image and a food type within the target contour image;
   step S3, binarizing the target contour image to obtain a binarized target contour image, wherein a food part of the target contour image is set to 1 and a background part of the target contour image is set to 0;
   step S4, inputting the binarized target contour image into a pre-trained three-dimensional reconstruction model to output a three-dimensional point cloud, wherein the pre-trained three-dimensional reconstruction model comprises a feature encoder and a point cloud predictor connected with the feature encoder, the feature encoder comprises a convolutional layer and a rectified linear unit (ReLU) layer, and the point cloud predictor is a fully connected network;
   step S5, calculating a volume of the three-dimensional point cloud based on a three-dimensional point cloud under a world coordinate system, and determining a volume of a food in the target contour image based on the volume of the three-dimensional point cloud; and
   step S6, obtaining a weight of the food in the food image based on the volume of the food and a volume-weight conversion ratio of the food type, and obtaining calories and nutritional components of the food in the food image based on the weight of the food in the food image.

2. The health management method based on the image recognition as claimed in claim 1, wherein in the step S2, a semantic segmentation network is used to extract the object contour images in the food image.

3. The health management method based on the image recognition as claimed in claim 1, wherein the step S2 specifically comprises:
   separating foreground contours from background contours in the food image, matching each object contour image belonging to the foreground contours with each pre-stored food type information to determine the target contour image and the food type within the target contour image.

4. The health management method based on the image recognition as claimed in claim 1, wherein the matching each object contour image with each pre-stored food type information to determine the target contour image and the food type within the target contour image comprises:
   matching each object contour image with each pre-stored food type information to obtain target object contour images and food type information whose matching rates exceeding a preset threshold from the object contour images and the pre-stored food type information, and pairing one of the target object contour images with a highest matching rate with the food type information to determine the target contour image and the food type within the first target contour image.

5. The health management method based on the image recognition as claimed in claim 1, before the step S1, further comprising:

   receiving food images for training to generate a training sample, and inputting the training sample into a three-dimensional reconstruction model for model training based on a loss function to obtain the pre-trained three-dimensional reconstruction model,
   wherein the loss function is as follows:

$$L(\{S_i^{pred}\}, \{S_i^{gt}\}) = \sum_i d(S_i^{pred}, S_i^{gt}),$$

$$d\left(S_i^{pred}, S_i^{gt}\right) = d_1\left(S_i^{pred}, S_i^{gt}\right) + d_2(S_i^{pred}, S_i^{gt}),$$

$$d_1(S_i^{pred}, S_i^{gt}) = \sum_{x \in S_i^{pred}} \min_{y \in S_i^{gt}} \|x - y\|_2^2 + \sum_{y \in S_i^{gt}} \min_{x \in S_i^{pred}} \|x - y\|_2^2,$$

$$d_2(S_i^{pred}, S_i^{gt}) = \min_{\emptyset: S_i^{pred} \to S_i^{gt}} \sum_{x \in S_i^{pred}} \|x - \emptyset(x)\|_2,$$

where L represents the loss function, i represents the training sample, $S_i^{pred}$ represents a predicted three-dimensional point cloud of the training sample i output by a three-dimensional reconstruction model S , $S_i^{gt}$ represents true three-dimensional information of the training sample i, $S = \sum_{j=1}^{N}\{(x_j, y_j, z_j)\}$ represents an unordered point set, ø represents mapping from $S_i^{pred} \to S_i^{gt}$, x represents a point value in the predicted three-dimensional point cloud output by the three-dimensional reconstruction model S, and y represents a point value in true three-dimensional information of the training sample i.

6. The health management method based on the image recognition as claimed in claim 1, further comprising:
step S7, reading, in response to determining there is the food label in the food image, basic food information according to the food label, and obtaining the calories and nutritional components of the food in the food image based on the basic food information.

7. The health management method based on the image recognition as claimed in claim 6, wherein the basic food information comprises weight information, calorie information and nutritional component information of the food.

8. The health management method based on the image recognition as claimed in claim 6, wherein the food label comprises a food weight label, a food calorie label, a food nutritional component label, a food additive content label and a food taste and texture label,

the food weight label comprises a combination of a weight attribute, a number, and a measurement unit,
the food calorie label comprises comparative information between the calories of the food and one or both of an adult daily standard calorie and a minor daily standard calorie,
the food nutritional component label comprises comparative information between each nutritional component of the food and one or both of an adult daily standard nutritional component corresponding to each nutritional component of the food and a minor daily standard nutritional component corresponding to each nutritional component of the food, the food additive content label comprises a combination of food additive types, numbers, and measurement units, and
the food taste and texture label comprises comparative information between tastes of the food and representative food tastes, and comparative information between textures of the food and representative food textures.

9. The health management method based on the image recognition as claimed in claim 8, wherein the food label further comprises an allergen label, the allergen label comprises a combination of allergen attributes and allergen components in the food.

10. A health management device based on image recognition, comprising:

the acquisition module (1) is used for acquiring a food picture shot by a user and judging whether a food mark exists in the food picture;
the target contour image selection module (2) is used for extracting a contour image of an object in the food picture if no food mark exists in the food picture, matching the contour image of each object with each type of food type information stored in advance and determining the target contour image and the type of the food in the target contour image;
the three-dimensional reconstruction module (3) is used for carrying out binaryzation on the target contour image, setting the food part as 1 and the background part as 0, inputting the binaryzation target contour image into a pre-trained three-dimensional reconstruction model and outputting a three-dimensional point cloud; the three-dimensional reconstruction model comprises a feature encoder and a point cloud predictor which are connected in sequence, wherein the feature encoder consists of a convolution layer and a ReLU layer, and the point cloud predictor is a fully-connected network;

the first heat and nutrient component determining module (4) is used for calculating the volume of the three-dimensional point cloud according to the three-dimensional point cloud under the world coordinate system and determining the food volume in the target contour image according to the volume of the three-dimensional point cloud; obtaining the weight of the food type in the food picture according to the volume of the food and the volume-weight conversion ratio of the corresponding food type; according to the weight of the food type in the food picture, the calorie and the nutrient content of the food in the food picture are obtained.

a food image taken by a user is obtained and whether there is a food label in the food image is determined ⟋S1

in response to determining there is no food label in the food image, object contour images are extracted in the food image, and each object contour image is matched with pre-stored information of each of food types to determine a first target contour image and a food type within the first target contour image ⟋S2

the first target contour image is binarized to obtain a first binarized target contour image, a food part of the first target contour image is set to 1 and a background part of the first target contour image is set to 0 ⟋S3

the first binarized target contour image is input into a pre-trained three-dimensional reconstruction model to output a three-dimensional point cloud ⟋S4

a volume of the three-dimensional point cloud is calculated based on a three-dimensional point cloud under world coordinate system, and a volume of a food in the first target contour image is determined based on the volume of the three-dimensional point cloud ⟋S5

a weight of the food in the food image is obtained based on the volume of the food and a volume-weight conversion ratio of the food type, and the calories and the nutritional components of the food in the food image are obtained based on the weight of the food in the food image ⟋S6

in response to determining there is the food label in the food image, basic food information is read according to the food label, and the calories and nutritional components of the food are obtained in the food image based on the basic food information ⟋S7

an additive content and taste texture information of the food in the food image are obtained based on the basic food information. Personalized suggestions are provided to the user based on the calories, the nutritional components, the additive content, and the taste texture information of the food in the food image ⟋S8

FIG. 1

FIG. 2

FIG. 3

## INTERNATIONAL SEARCH REPORT

| International application No. |
| --- |
| **PCT/CN2024/076363** |

### A.    CLASSIFICATION OF SUBJECT MATTER

G06V10/44(2022.01)i；  G06V10/28(2022.01)i；  G06T17/00(2006.01)i

According to International Patent Classification (IPC) or to both national classification and IPC

### B.    FIELDS SEARCHED

Minimum documentation searched (classification system followed by classification symbols)

IPC：G06V, G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 图像, 图片, 食材, 食物, 食品, 识别, 健康, 热量, 卡路里, 营养, 匹配, 类型, 点云, 模型, 体积, 重量, 质量, image, picture, food, recognize, identify, healthy, heat, calorie, nutrition, match, type, point cloud, model, volume, weight

### C.    DOCUMENTS CONSIDERED TO BE RELEVANT

| Category* | Citation of document, with indication, where appropriate, of the relevant passages | Relevant to claim No. |
| --- | --- | --- |
| PX | CN 117078955 A (HAI XIAO ENERGY INDUSTRIAL CO., LTD. et al.) 17 November 2023 (2023-11-17) <br> claims 1-10 | 1-10 |
| Y | CN 113591576 A (QINGDAO HAIER TECHNOLOGY CO., LTD. et al.) 02 November 2021 (2021-11-02) <br> description, paragraphs [0027]-[0059] | 1-10 |
| Y | CN 110020609 A (LYU DANQING) 16 July 2019 (2019-07-16) <br> description, paragraphs [0045]-[0057] | 1-10 |
| A | CN 108198188 A (BEIJING QIHOO TECHNOLOGY CO., LTD.) 22 June 2018 (2018-06-22) <br> entire document | 1-10 |
| A | CN 111027500 A (ZHANG ZHENGDONG) 17 April 2020 (2020-04-17) <br> entire document | 1-10 |
| A | US 2015347520 A1 (ORACLE INTERNATIONAL CORP.) 03 December 2015 (2015-12-03) <br> entire document | 1-10 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 April 2024** | **30 April 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/076363** |

| Patent document cited in search report | | | Publication date (day/month/year) | Patent family member(s) | Publication date (day/month/year) |
| --- | --- | --- | --- | --- | --- |
| CN | 117078955 | A | 17 November 2023 | None | |
| CN | 113591576 | A | 02 November 2021 | None | |
| CN | 110020609 | A | 16 July 2019 | None | |
| CN | 108198188 | A | 22 June 2018 | None | |
| CN | 111027500 | A | 17 April 2020 | None | |
| US | 2015347520 | A1 | 03 December 2015 | None | |

Form PCT/ISA/210 (patent family annex) (July 2022)